# FASCICULE DE BREVET EUROPEEN

(11) **EP 2 588 556 B1**
(45) Date de publication et mention de la délivrance du brevet: **12.04.2017**
(21) Numéro de dépôt: 11800250.0
(22) Date de dépôt: 07.06.2011
(51) Int. Cl.: C09K 5/04, C10M 105/38, C10M 171/00

(54) **COMPOSITION A BASE DE 2,3,3,3-TETRAFLUOROPROPENE**
ZUSAMMENSETZUNG MIT 2,3,3,3-TETRAFLUORPROPEN
COMPOSITION COMPRISING 2,3,3,3-TETRAFLUOROPROPENE

(30) Priorité: 15.07.2010 US 364536 P; 30.06.2010 FR 1002749
(43) Date de publication de la demande: 08.05.2013
(73) Titulaire: Arkema France, 92700 Colombes (FR)
(72) Inventeur: BOUSSAND, Béatrice, F-69110 Sainte Foy les Lyon (FR)
(74) Mandataire: Dang, Doris
(86) Numéro de dépôt international: PCT/FR2011/051283
(87) Numéro de publication internationale: WO 2012/001255

(56) Documents cités:
- EP-A1- 2 119 759
- EP-A1- 2 149 543
- WO-A1-2010/029704
- US-A- 5 895 778
- US-A1- 2008 111 099

## Description

La présente invention concerne une composition renfermant du 2,3,3,3-tetrafluoropropène et un lubrifiant, apte à être utilisée dans la climatisation.

Les problèmes posés par les substances appauvrissant la couche d'ozone atmosphérique ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la climatisation a beaucoup investi dans la substitution de ces fluides frigorigènes et c'est ainsi que les hydrofluorocarbures (HFC) ont été commercialisés.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1430) est considéré comme ayant un pouvoir de réchauffement élevé. La contribution à l'effet de serre d'un fluide est quantifiée par un critère, le GWP (Global Warming Potential) qui résume le pouvoir de réchauffement en prenant une valeur de référence de 1 pour le dioxyde de carbone.

Les hydrofluorooléfines (HFO) ont un pouvoir de réchauffement peu élevé et donc répondent aux objectifs fixés par le protocole de Kyoto. Le document JP 4-110388 divulgue le 2,3,3,3-tetrafluoropropène (HFO-1234yf) comme agent de transfert de chaleur en réfrigération, climatisation et dans les pompes à chaleur.

Dans le domaine industriel, les machines frigorifiques les plus employées sont basées sur le refroidissement par évaporation d'un fluide frigorigène liquide. Après vaporisation, le fluide est compressé puis refroidi afin de repasser à l'état liquide et poursuivre ainsi le cycle.

Pour des raisons économiques, les compresseurs frigorifiques sont très souvent du type alternatifs à cylindres lubrifiés. En général, la lubrification interne des compresseurs est indispensable pour réduire l'usure et l'échauffement des organes en mouvement, parfaire leur étanchéité et les protéger contre la corrosion.

Les principales caractéristiques demandées aux huiles destinées à la lubrification des compresseurs frigorifiques sont la miscibilité avec le fluide frigorigène, la solubilité, la stabilité thermique et chimique.

C'est ainsi que les polyalkylènes glycol (PAG) ont été mis au point comme lubrifiants du HFC-134a dans la climatisation automobile.
Le document US 7534366 recommande l'emploi d'un PAG, sous forme d'homo ou copolymère constitué de 2 ou plus de groupements oxypropylène et ayant une viscosité de 10 à 200 centiStokes à 37°C, en combinaison avec le HFO-1234yf dans la climatisation. Le document EP 2119759 décrit une composition pour la climatisation automobile comprenant un lubrifiant à base d'esters de polyol (POE) et du fluide frigorigène 2,3,3,3-tetrafluoropropène La demanderesse a maintenant mis au point un couple fluide frigorigène et lubrifiant, apte à être utilisée en climatisation.

La présente demande a donc pour objet une composition comprenant au moins un lubrifiant à base d'esters de polyol (POE) et un fluide frigorigène F comprenant au moins 99,8 % en poids de 2,3,3,3-tetrafluoropropène, de 0,5 à 500 ppm de 1,1,1,2,3-pentafluoropropène, de 0,5 à 500 ppm de 3,3,3-trifluoropropyne et de 1 à 1500 ppm de composés à base de 2 ou 3 atomes de carbone comportant éventuellement une liaison oléfinique, à l'exclusion du HFO-1225ye et du 3,3,3-trifluoropropyne.

Les esters de polyol sont obtenus par réaction d'un polyol (un alcool contenant au moins 2 groupements hydroxyles, -OH) avec un acide carboxylique monofonctionnel ou plurifonctionnel ou avec un mélange d'acides carboxyliques monofonctionnels. L'eau formée lors de cette réaction est éliminée pour éviter la réaction inverse (c-à-d l'hydrolyse). En effet, les esters de polyol sont susceptibles de réagir avec l'eau dans certaines conditions pour redonner le polyol.

La demanderesse a découvert que malgré ce préjugé, il est possible d'utiliser le fluide frigorigène F avec du POE dans la climatisation, en particulier dans la climatisation automobile où le risque d'entrée d'humidité est plus élevé. Généralement, un circuit de climatisation automobile comporte un filtre desséchant de manière à ce que le taux d'humidité ne dépasse pas environ 1000 ppm.

Selon la présente invention, les polyols préférés sont ceux ayant un squelette de néopentyle comme le néopentyle glycol, le triméthylol propane, le pentaerythritol et le dipentaerythritol; le pentaerythritol est le polyol préféré.

Les acides carboxyliques peuvent comprendre de 2 à 15 atomes de carbone, le squelette carboné pouvant être linéaire ou ramifié. On peut citer notamment l'acide n-pentanoïque, l'acide n-hexanoïque, l'acide n-heptanoïque, l'acide n-octanoïque, l'acide 2-éthylhexanoïque, l'acide 2,2-diméthylpentanoïque, l'acide 3,5,5-trimethylhexanoïque, l'acide adipique, l'acide succinique et leurs mélanges.

Certaines fonctions alcool ne sont pas estérifiées, cependant leur proportion reste faible. Ainsi, les POE peuvent comprendre entre 0 et 5 % molaire relatif de motifs CH₂-OH par rapport aux motifs -CH₂-O-(C=O)-.

Les lubrifiants POE préférés sont ceux ayant une viscosité de 1 à 1000 centiStokes (cSt) à 40°C, de préférence de 10 à 200 cSt, et avantageusement de 30 à 80 cSt.

De préférence, la composition selon l'invention comprend au moins un lubrifiant à base d'esters de polyol (POE), un fluide frigorigène F comprenant au moins 99,9 % en poids de 2,3,3,3-tetrafluoropropène, de 0,5 à 250 ppm de 1,1,1,2,3-pentafluoropropène, de 0,5 à 250 ppm de 3,3,3-trifluoropropyne et de 1 à 500 ppm de composés à base de 2 ou 3 atomes de carbone comportant éventuellement une liaison oléfinique, à l'exclusion du HFO-1225ye et du 3,3,3-trifluoropropyne.

La composition particulièrement préférée comprend au moins un lubrifiant à base d'esters de polyol (POE), un fluide frigorigène F comprenant au moins 99,95 % en poids de 2,3,3,3-tetrafluoropropène, de 0,5 à 250 ppm de 1,1,1,2,3-pentafluoropropène et de 0,5 à 100 ppm de 3,3,3-trifluoropropyne et de 1 à 150 ppm de composés à base de 2 ou 3 atomes de carbone comportant éventuellement une liaison oléfinique, à l'exclusion du HFO-1225ye et du 3,3,3-trifluoropropyne.

Selon un mode préféré de l'invention le(s) POE représente(nt) entre 10 et 50 %, inclus, en poids de la composition.

La présente invention a également pour objet l'utilisation de la composition précitée dans la réfrigération, la climatisation, avantageusement dans la climatisation automobile et de façon préférée dans les véhicules électriques. En outre, cette composition est stable thermiquement et/ou chimiquement.

Selon un autre mode préféré de l'invention le(s) POE représente(nt) entre 1 et 4 %, inclus, en poids de la composition. Cette composition correspond de préférence à celle qui circule dans l'évaporateur et le condensateur d'un circuit de climatisation automobile.

### PARTIE EXPERIMENTALE

Les essais de stabilité thermique sont effectués selon la norme ASHRAE 97-2007: "sealed glass tube method to test the chemical stability of materials for use within refrigerant systems".

Les conditions de test sont les suivantes :

| | |
|---|---|
| masse de fluide F: | 2,2 g |
| masse de lubrifiant : | 5 g |
| température : | 200°C |
| durée : | 14 jours |

Le coupon d'acier et le lubrifiant sont introduits dans un tube en verre de 42,2 ml. Le tube est ensuite tiré sous vide puis le fluide F y est ajouté. Le tube est alors soudé pour le fermer et placé dans une étuve à 200°C pendant 14 jours.

En fin de test, différentes analyses sont réalisées :
- la phase gaz est récupérée pour être analysée par chromatographie phase gazeuse : les principales impuretés ont été identifiées par GC/MS (chromatographie phase gazeuse couplée spectrométrie de masse). On peut ainsi regrouper les impuretés venant du fluide F et celles venant du lubrifiant.
- le coupon d'acier est pesé (mesure de la vitesse de corrosion) et observé au microscope.
- le lubrifiant est analysé : couleur (par spectrocolorimétrie, Labomat DR Lange LICO220 Modèle MLG131), humidité (par coulométrie Karl Fischer, Mettler DL37) et indice d'acide (par dosage avec de la potasse méthanolique 0,01N).

2 lubrifiants commerciaux ont été testés : l'huile PAG ND8 et l'huile POE Ze-GLES RB68. Ces lubrifiants contiennent initialement respectivement 510 et 50 ppm d'eau. Des essais ont ensuite été effectués en ajoutant de l'eau de manière à atteindre 1000 ppm d'eau dans chaque lubrifiant.

Le fluide F utilisé pour ces essais contient 99,85 % en poids du HFO-1234yf , 213 ppm de 3,3,3-trifluoropropyne, 30 ppm de HFO-1225ye et 1257 ppm de composés à base de 2 ou 3 atomes de carbone comportant éventuellement une liaison oléfinique.

| | PAG ND8 | | POE Ze-GLES RB68 | |
|---|---|---|---|---|
| Teneur en eau | 510 ppm | 1000 ppm | 50 ppm | 1000 ppm |
| Sous-produits dans la phase gaz : | | | | |
| ➢ à partir du fluide F | 1000 ppm | 900 ppm | 300 ppm | 180 ppm |
| ➢ à partir du lubrifiant | 3% | 2,3 % | 1000 ppm | 400 ppm |
| Vitesse de corrosion | < 5 µm/an | < 5 µm/an | < 5 µm/an | < 5 µm/an |
| Observation du coupon d'acier | Brillant | Brillant | Brillant, légèrement bleu | Brillant, légèrement bleu |
| Analyse du lubrifiant : | | | | |
| couleur | 9 Gardner | 9,5 Gardner | 110 Hazen | 250 Hazen |
| humidité | 1500 ppm | 4200 ppm | 250 ppm | 1100 ppm |
| Indice d'acide | 4,5 mg KOH/g | 5 mg KOH/g | 0,5 mg KOH/g | 0,2 mg KOH/g |

On constate qu'en présence d' un même taux d'humidité, le fluide F est plus stable en présence du POE.

## Revendications

1. Composition comprenant au moins un lubrifiant à base d'esters de polyol (POE) et un fluide frigorigène F comprenant au moins 99,8 % en poids de 2,3,3,3-tetrafluoropropène, de 0,5 à 500 ppm de 1,1,1,2,3-pentafluoropropène, de 0,5 à 500 ppm de 3,3,3-trifluoropropyne et de 1 à 1500 ppm de composés à base de 2 ou 3 atomes de carbone comportant éventuellement une liaison oléfinique, à l'exclusion du HFO-1225ye et du 3,3,3-trifluoropropyne.

2. Composition selon la revendication 1 **caractérisée en ce que** le fluide frigorigène F comprend au moins 99,9 % en poids de 2,3,3,3-tetrafluoropropène, de 0,5 à 250 ppm de 1,1,1,2,3-pentafluoropropène, de 0,5 à 250 ppm de 3,3,3-trifluoropropyne et de 1 à 500 ppm de composés à base de 2 ou 3 atomes de carbone comportant éventuellement une liaison oléfinique, à l'exclusion du HFO-1225ye et du 3,3,3-trifluoropropyne

3. Composition selon la revendication 1 ou 2 **caractérisée en ce que** le fluide frigorigène F comprend au moins 99,95 % en poids de 2,3,3,3-tetrafluoropropène, de 0,5 à 250 ppm de 1,1,1,2,3-pentafluoropropène, de 0,5 à 100 ppm de 3,3,3-trifluoropropyne et de 1 à 150 ppm de composés à base de 2 ou 3 atomes de carbone comportant éventuellement une liaison oléfinique oléfinique, à l'exclusion du HFO-1225ye et du 3,3,3-trifluoropropyne.

4. Composition selon l'une quelconque des revendications 1 à 3 **caractérisée en ce que** les POE sont obtenus à partir de polyols ayant un squelette de néopentyle comme le néopentyle glycol, le triméthylol propane, le pentaerythritol et le dipentaerythritol.

5. Composition selon l'une quelconque des revendications 1 à 4 **caractérisée en ce que** les POE sont obtenus à partir d'acide carboxylique ayant de 2 à 15 atomes de carbone, linéaire ou ramifié.

6. Composition selon l'une quelconque des revendications 1 à 5 **caractérisée en ce que** le(s) POE représente(nt) entre 10 et 50 % en poids de la composition.

7. Utilisation de la composition selon l'une quelconque de la revendication 1 à 6 en climatisation.

## Patentansprüche

1. Zusammensetzung, umfassend mindestens ein Schmiermittel auf Basis von Polyolestern (POE) und mindestens ein Kältefluid F, umfassend mindestens 99,8 Gew.-% 2,3,3,3-Tetrafluorpropen, 0,5 bis 500 ppm 1,1,1,2,3-Pentafluorpropen, 0,5 bis 500 ppm 3,3,3-Trifluorpropin und 1 bis 1500 ppm Verbindungen auf Basis von 2 oder 3 Kohlcnstoffatomen, die gegebenenfalls eine olefinische Bindung entfalten, unter Ausschluss von HFO-1225ye und 3,3,3-Trifluorpropin.

2. Zusammensetzung nach Anspruch 1, dadurch gekennzeichnen, dass das Kältefluid F mindestens 99,9 Gew.-% 2,3,3,3-Tetrafluorpropen, 0,5 bis 250 ppm 1,1,1,2,3-Pentafluorpropen, 0,5 bis 250 ppm 3,3,3-Trifluorpropin und 1 bis 500 ppm Verbindungen auf Basis von 2 oder 3 Kohlenstoffatomen, die gegebenenfalls eine olefinische Bindung enthalten, unter Ausschluss von HFO-1225ye und 3,3,3-Trifluorpropin umfasst.

3. Zusammensetzung nach Anspruch 1 oder 2, **dadurch gekennzeichnet, dass** das Kältefluid F mindestens 99,95 Gew.-% 2,3,3,3-Tetrafluorpropen, 0,5 bis 250 ppm 1,1,1,2,3-Pentafluorpropen, 0,5 bis 100 ppm 3,3,3-Trifluorpropin und 1 bis 150 ppm Verbindengen auf Basis von 2 oder 3 Kohlenstoffatomen, die gegebenenfalls eine olefinische Bindung enthalten, unter Ausschluss von HFO-1225ye und 3,3,3-Trifluorpropin umfasst.

4. Zusammensetzung nach einem der Ansprüche 1 bis 3, **dadurch gekennzeichnet, dass** die POE aus Polyolen mit einem Neopentylgerüst wie Neopentylglykol, Trimethylolpropan, Pentaerythritol und Dipentaerythritol erhalten werden.

5. Zusammensetzung nach einem der Ansprüche 1 bis 4, dadurch gekenntzeichnet, dass die POE aus einer linearen oder verzweigten Carbonsäure mit 2 bis 15 Kohlenstoffatomen erhalten werden.

6. Zusammensetzung nach einem der Ansprüche 1 bis 5, **dadurch gekennzeichnet, dass** der POE bzw. die POE zwischen 10 und 50 Ges.-% der Zusammensetzung ausmacht bzw. ausmachen.

7. Verwendung der Zusammensetzung nach einem der Ansprüche 1 bis 6 blei der Klimatisierung.

## Claims

1. Composition comprising at least one lubricant based on polyol esters (POEs) and a refrigerant F comprising at least 99.8% by weight of 2,3,3,3-tetrafluoropropene, from 0.5 to 500 ppm of 1,1,1,2,3-pentafluoropropene, from 0.5 to 500 ppm of 3,3,3-trifluoropropyne and from 1 to 1500 ppm of compounds containing 2 or 3 carbon atoms, optionally comprising an olefinic bond (with the exclusion of HFO 1225ye and 3,3,3-trifluoropropyne).

2. Composition according to Claim 1, **characterized in that** the refrigerant F comprises at least 99.9% by weight of 2,3,3,3-tetrafluoropropene, from 0.5 to 250 ppm of 1,1,1,2,3-pentafluoropropene, from 0.5 to 250 ppm of 3,3,3-trifluoropropyne and from 1 to 500 ppm of compounds containing 2 or 3 carbon atoms, optionally comprising an olefinic bond (with the exclusion of HFO 1225ye and 3,3,3 trifluoropropyne).

3. Composition according to Claim 1 or 2, **characterized in that** the refrigerant F comprises at least 99.95% by weight of 2,3,3,3-tetrafluoropropene, from 0.5 to 250 ppm of 1,1,1,2,3-pentafluoropropene, from 0.5 to 100 ppm of 3,3,3- trifluoropropyne and from 1 to 150 ppm of compounds containing 2 or 3 carbon atoms, optionally comprising an olefinic bond (with the exclusion of HFO 1225ye and 3,3,3 trifluoropropyne).

4. Composition according to any one of Claims 1 to 3, **characterized in that** the POEs are obtained from polyols having a neopentyl backbone, such as neopentyl glycol, trimethylol propane, pentaerythritol and dipentaerythritol.

5. Composition according to any one of Claims 1 to 4, characterize in that the POEs are obtained from a linear or branched carboxylic acid containing from 2 to 15 carbon atoms.

6. Composition according to any one of Claims 1 to 5, **characterized in that** the POE(s) represent(s) between 10% and 50% by weight of the composition.

7. Use of the composition according to any one of Claims 1 6, in air conditioning.
